# EUROPÄISCHE PATENTSCHRIFT

(11) **EP 0 633 290 B1**
(45) Veröffentlichungstag und Bekanntmachung des Hinweises auf die Patenterteilung: **20.05.1998**
(21) Anmeldenummer: 94110400.2
(22) Anmeldetag: 04.07.1994
(51) Int. Cl.: C08L 27/12

(54) **Mischungen aus Fluorpolymeren und oxidierten Polyarylensulfiden**
Mixtures of fluoropolymers and oxidized polyarylene sulfides
Mélanges de polymères fluorés et polysulfures d'arylène oxidées

(30) Priorität: 10.07.1993 DE 4323181
(43) Veröffentlichungstag der Anmeldung: 11.01.1995
(73) Patentinhaber: Ticona GmbH, 65926 Frankfurt am Main (DE)
(72) Erfinder: Scheckenbach, Helmut, D-63225 Langen (DE); Schleicher, Andreas, Dr., D-64683 Einhausen (DE); Kulpe, Jürgen, Dr., D-65929 Frankfurt (DE); Jansen, Bernd, D-84547 Emmerting (DE)

(56) Entgegenhaltungen:
- EP-A- 0 199 991
- EP-A- 0 356 948
- EP-A- 0 432 911
- EP-A- 0 633 291
- DATABASE WPI, Week 8518, Derwent Publications ltd., London, GB; AN 85-089682

## Beschreibung

Die Erfindung betrifft Mischungen aus Fluorpolymeren und oxidierten Polyarylensulfiden, insbesondere Polyphenylensulfonen oder teilweise oxidierten Polyarylensulfiden, die S/SO/SO₂-Brückenglieder enthalten und ihre Verwendung.

Fluorpolymere sind seit längerer Zeit bekannt. Sie zeichnen sich durch eine hohe Wärme- und ausgezeichnete Chemikalienbeständigkeit aus. Neben der hohen Zähigkeit zeigen aber sowohl die thermoplastisch verarbeitbaren als auch die thermoplastisch nicht verarbeitbaren Fluorpolymere eine ausgeprägte Kriechneigung auf. Zudem sind die tribologischen Eigenschaften von Fluorpolymeren in vielen Anwendungen nicht ausreichend.

In der Literatur sind Additive, beispielsweise auf Basis von Polyesterverbindungen beschrieben, die entweder die Kriechneigung oder den Abrieb von Fluorpolymeren verbessern (JP-A 580019397). Sie bergen jedoch folgende Nachteile:
1. die Polyesterverbindungen zersetzen sich bei den Verarbeitungstemperaturen der Fluorpolymere,
2. aufgrund der schlechten Mahlbarkeit ihrer Mischung ergibt sich eine schlechte Homogenisierung und
3. der Zusatz der bisher bekannten Additive setzt die Chemikalienresistenz der Fluorpolymere stark herab.

Letzteres gilt auch für aromatische Polysulfone (DE-A 24 18 282, JP-A-60-038465, EP-A-0 432 911, JP-A-60-038465 und EP-A-0 199 991). In diesen Fällen werden Polymere angeführt, die in bekannten organischen Lösemitteln wie Dimethylformamid oder Dichlormethan löslich sind.

Die EP-A-0 199 991 beschreibt in Beispiel 12 die Mischung eines bestimmten Fluorpolymeren nämlich, eines Extra-hoch-Molekulargewichts fluorierten Ethylen-Propylen-Copolymers mit Polyphenylensulfid durch Mischen der Bestandteile und anschließender Schmelz-Kompression. Mit normalem PTFE ist letztere Arbeitsweise nicht möglich. Aus keiner Stelle der Schrift kann jedoch ein Hinweis auf die Abriebfestigkeiten der betreffenden Polymermischungen entnommen werden, nachteilig ist auch die mangelnde Temperaturbeständigkeit des eingesetzten Polyphenylsulfids.

Bekannt ist ferner eine härtbare Mischung aus mit Wasserstoffperoxid behandeltem Polyphenylensulfid und einem Pigment, die 13 % Polytetrafluorethylen enthält (US-A-3,948,865). Sie dient zur rißfreien Beschichtung von Aluminium, die in kurzer Zeit gehärtet werden kann. Das Polytetrafluorethylen dient in diesem Falle nur als Füllstoff.

Es auch bekannt, daß durch Polymermischungen die Einstellung wichtiger mechanischer Eigenschaften möglich ist. Man ist bis heute jedoch weit davon entfernt, die Eigenschaften von Polymermischungen gesichert vorherzusagen, so daß das Mischen von verschiedenen Polymeren weitgehend empirisch bleibt (Lit.: T. Stevens, Material Engineering 9 (1990) S. 29).

Es bestand daher die Aufgabe, die im Stand der Technik beschriebenen Nachteile zu vermeiden.

Die Erfindung betrifft somit eine Polymermischung aus
A) mindestens einem Fluorpolymer mit einem Anteil von 50 bis 99 Gew.-% und
B) mindestens einem Polyarylensulfon oder einer Polyarylenverbindung mit mindestens zwei der Brückenglieder -S-, SO- und -SO₂- oder einer Mischung von beiden, wobei die Komponente B) ein lineares oder verzweigtes Polyarylensystem (Mw: 4.000 - 200.000) mit der wiederkehrenden Einheit der Formel (IX) ist, das mindestens eine S und/oder SO und/oder SO₂-Gruppe als Bindeglied enthält

   -[(Ar¹)_{d}-X]ₑ-[(Ar²)ᵢ-Y]ⱼ-[(Ar³)ₖ-Z]ₗ-[(Ar⁴)ₒ-W]ₚ- (IX)

   wobei Ar¹, Ar², Ar³, Ar⁴, W, X, Y und Z unabhängig voneinander gleich oder verschieden sind, die Indizes d, e, i, j, k, l, o und p sind unabhängig voneinander Null oder ganze Zahlen 1, 2, 3, 4 wobei ihre Summe mindestens 2 ergeben muß, Ar¹, Ar², Ar³ und Ar⁴ stehen in der Formel (IX) für einfache oder direkt para-, meta- oder orthoverknüpfte Arylensysteme mit 6 bis 18 C-Atomen, W, X, Y und Z stellen Verknüpfungsgruppen dar, ausgewählt aus -SO₂-, -S-, -SO-, -CO-, -CO₂-, Alkylen- oder Alkylidengruppen, jeweils mit 1 - 6 C-Atomen und NR¹-Gruppen, wobei R¹ für Alkyl- oder Alkyliden-Gruppen mit 1 - 6 C-Atomen steht, mit der Maßgabe, daß Polymere aus der Klasse der Polyethersulfone ausgenommen sind, mit einem Anteil von 1 bis 50 Gew.-%, wobei die Summe der Komponenten A) und B) stets 100 Gew.-% ist.

Es wurde gefunden, daß durch den Zusatz von Polyarylensulfonen und/oder S/SO/SO₂-Arylenverbindungen zu thermoplastisch verarbeitbaren oder nicht theromplastisch verarbeitbaren Fluorpolymeren deren Kriechneigung und Abrieb unter weitestgehendem Erhalt der Chemikalien- und Wärmebeständigkeit vermindert werden. Ferner zeichnen sich derartige Polymermischungen durch sehr gute mechanischen Eigenschaften im Zug-Dehnungsversuch aus, wobei speziell cie Reißdehnung hervorzuheben ist.

Gemäß der Erfindung können folgende Fluorthermoplaste mit wiederkehrenden Einheiten der Formel (I) verwendet werden: 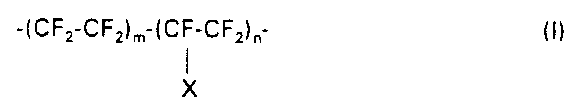 wobei X für O-R steht, mit R als perfluoriertem Alkylrest mit 1 bis 8 C-Atomen, m und n stehen jeweils für Zahlen von 0,01 bis 1, wobei die Summe von m und n 1 ergibt.

Weiterhin können die Mischungen Fluorthermoplaste mit wiederkehrenden Einheiten der Formeln (II) - (IV) enthalten:

-(CF₂-CF₂)ₘ-(CH₂-CH₂)ₙ- (II)

-(CF₂-CF(CF₃))ₘ-(CF₂-CF₂)ₙ- (III)

-(CF₂-C(Cl)F)ₘ-(CH₂-CH₂)ₙ- (IV)

worin m und n die oben genannte Bedeutung besitzen, sowie wiederkehrenden Einheiten der Formeln V und VI:

- CF₂-C(Cl)F- (V)

-CH₂-CF₂- (VI)

Für die Mischungen gemäß der Erfindung sind außerdem thermoplastisch nicht verarbeitbare Fluorpolymere geeignet, die Struktureinheiten der folgenden Formeln aufweisen:

-CH₂-CHF- (VII)

-CF₂-CF₂- (VIII)

Verwendbare Polymere für die Mischungen gemäß der Erfindung sind lineare und verzweigte Polyarylene gemäß Anspruch 1, die eine zu den jeweils eingesetzten Fluorpolymeren adäquate Wärmebeständigkeit aufweisen, d. h. beide Polymere in der Mischung sind unter den Verarbeitungsbedingungen stabil.

Besonders geeignete Polymere sind Polyarylene mit wiederkehrenden Einheiten der Formel (X):

[-(S-E-)ₐ-(-SO-E)_{b}-(SO₂-E)_{c}-] (X)

in der E unabhängig voneinander Phenylen, Naphthylen oder Biphenylen bedeutet, b und c unabhängig voneinander Werte von 0 bis 1 darstellen und a Werte von 0 bis kleiner 1 aufweist, mit der Maßgabe, daß die Summe aus a+b+c gleich 1 ist und mindestens zwei der Indices größer Null sind.

Speziell einsetzbare Polymere mit wiederkehrenden Einheiten der Formeln (XI) - (XIII) sind 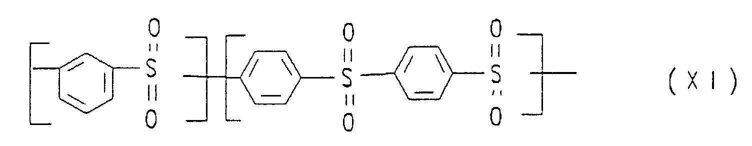 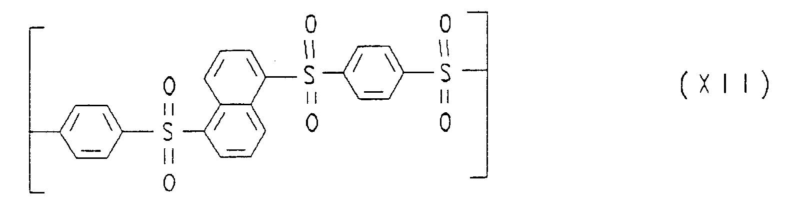 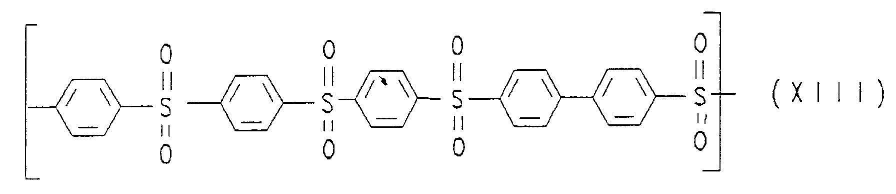 sowie oxidierte Polyphenylensulfide mit wiederkehrenden Einheiten der Formel (XIV), 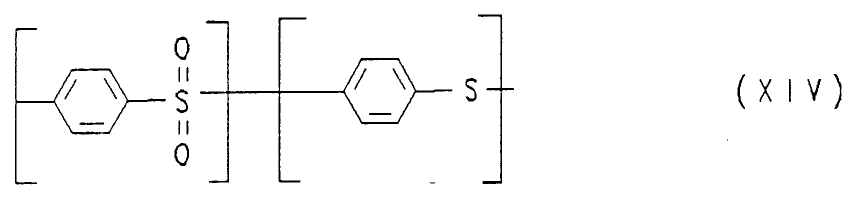 wobei der Sulfonanteil mindestens 65 % beträgt.

Die Herstellung der oxidierten Polyarylensulfide geschieht nach den in den deutschen Patentanmeldungen DE 43 14 737 ("Zweistufige Oxidation von Polyarylensulfiden") und DE 43 14 738 ("Verfahren zur Oxidation von Thioethergruppen enthaltenden Polyarylenverbindungen") vom 4. Mai 1993 beschriebenen Verfahren, auf die hiermit Bezug genommen wird.

Die Teilchengröße der oxidierten Polyarylensulfide gemäß der Erfindung liegt im allgemeinen bei 3•10⁻⁶ bis 300•10⁻⁶ m, vorzugsweise 5•10⁻⁶ bis 100•10⁻⁶ m und insbesondere bei 5•10⁻⁶ bis 50•10⁻⁶ m.

Der Anteil an Polyarylensulfonen oder S/SO/SO₂-Arylenverbindungen beträgt 1 bis 50 Gew.-%, vorzugsweise 2 bis 40 Gew.-% und insbesondere 3 bis 30 Gew.-%; der Anteil an Fluorpolymeren beträgt 50 bis 99 Gew.-%, vorzugsweise 60 bis 98 Gew.-% und insbesondere 70 bis 97 Gew.-%, wobei sich die Anteile der beiden Polymere, relativ in Bezug auf die Gesamtpolymer-Mischung, auf 100 % ergänzen. Die Mischungen gemäß der Erfindung können ein oder mehrere Fluorpolymere und mindestens ein Polyarylensulfon und/oder eine S/SO/SO₂-Arylenverbindung sowie modifizierte Fluorpolymere, modifizierte Polyarylensulfone oder modifizierte S/SO/SO₂-Arylencopolymere enthalten. Bei thermoplastischer Verarbeitbarkeit der Fluorpolymere werden die Mischungen gemäß der Erfindung durch für Thermoplasten bekannte Standardmethoden hergestellt und verarbeitet, z. B. durch Kneten, Blasformen, Extrusion, Pressen oder Spritzguß. Bei nicht thermoplastisch verarbeitbaren Fluorpolymeren werden die erfindungsgemäßen Mischungen durch Standardmethoden wie Transfer-Moulding, Ramextrusion, Heißpressen, Kaltpressen mit anschließendem Sintervorgang hergestellt und verarbeitet.

Die erfindungsgemäßen Mischungen können übliche Additive enthalten, beispielsweise thermische Stabilisatoren, UV-Stabilisatoren, Antistatika, Flammschutzmittel, Farbstoffe, Pigmente, anorganische und organische Füllstoffe.
Sie werden vorteilhaft als Werkstoffe in Anwendungen eingesetzt, bei denen eine hohe Wärmeformbeständigkeit und/oder Chemikalienresistenz, gepaart mit ausreichender Zähigkeit erforderlich sind, z. B. als Gleitlager oder Dichtungmaterialien.

### Beispiele:

1. Mischungen aus Fluorpolymer und Polyphenylensulfon
A) Polyphenylensulfon
833 g Polyphenylensulfid-Pulver (Durchmesser 20 µm) mit einer Glasübergangstemperatur Tg von 94°C und einem Schmelzpunkt Tm von 290°C wurden in 2,9 l Eisessig bei 55°C vorgelegt, 16 ml konz. Schwefelsäure zugegeben und 616 g Wasserstoffperoxid (87%) unter Temperaturkonstanz zugetropft. Nach einer Nachrührzeit von 3 Stunden bei 58 bis 65°C und 1 1/2 Stunden bei 80°C wurde die Reaktionslösung abgekühlt, bei 50°C abgesaugt, mit Wasser gewaschen und getrocknet. Ausbeute: 998 g (93 %); DSC-Daten (differential scanning calorimetry): Tg: 352°C; Tm: 520°C (Zersetzung).

| Elementaranalyse: (C₆H₄SO₂)ₙ | | | |
|---|---|---|---|
| ber.: | C 51,42 % | H 2,88 % | S 22,87 % |
| gef.: | C 51,35 % | H 2,90 % | S 22,75 % |

B) Das Fluorpolymer hatte folgende Eigenschaften: Dichte d = 2,16 g/cm³; Mw (mean molecular weight): 10⁷; Durchmesser 20 µm (® Hostaflon TF 1750, Fa. Hoechst AG, Frankfurt a. M., Bundesrepublik Deutschland).
Pulver der beiden Polymere (Angaben der Gewichtsteile s. Tabelle) wurden zunächst gemischt und anschließend zu Probekörpern von 65 mm Durchmesser und 60 mm Höhe auf einer hydraulischen Presse mit Drücken entsprechend ihrer Zusammensetzung kalt verpreßt (90:10/350 bar; 80:20/500 bar vgl. Tabelle). Daran schloß sich eine lineare Aufheizung mit 45 K/Stunde von Raumtemperatur auf 375° C an. Die Probekörper wurden dann weitere 4 Stunden dieser Temperatur ausgesetzt. Die anschließende Abkühlung auf Raumtemperatur geschah ebenfalls mit 45 K/Stunde. Aus diesen Probekörpern wurden durch mechanische Bearbeitung Prüfkörper hergestellt und den in der Tabelle aufgeführten Prüfungen unterworfen. Die dabei erhaltenen Werte sind ebenfalls angegeben. Ebenfalls wurde eine Mischung hergestellt, die anstelle der Komponente A ein handelsübliches Polyarylat (® Isaryl 15, Fa. Isonova, Wien, Österreich) enthielt.

**Tabelle 1:**

| Kennwerte PTFE-Mischungen | | | | |
|---|---|---|---|---|
| Mischung B : A(T) | 100 : 0 | 90 : 10 | 80 : 20 | 90 B: 10 Isaryl 15¹⁾ |
| Dichte [g/cm³] | 2,16 | 2,05 | 1,93 | - |
| Reißfestigkeit [MPa]²⁾ | 40⁴⁾ | 19 | 12 | |
| Reißdehnung [%]²⁾ | 450⁴⁾ | 460 | 315 | |
| Abrieb Stahl [mg]³⁾ | > 50 | 4 | - | 37 |
| Abrieb Grauguß [mg]³⁾ | > 360⁵⁾ | 3 | 5 | 93 |

| | | | | |
|---|---|---|---|---|
| ¹⁾ Vergleich | | | | |
| ²⁾ Reißfestigkeit/-dehnung entsprechend ASTM D1457 bzw. ASTM D4895 Zug-Dehnungsmaschine der Firma Frank Typ 81801 (Weinheim, Bundesrepublik Deutschland). | | | | |
| ³⁾ Die Abriebuntersuchungen wurden nach H. Ruck, Der Konstrukteur 1-2/93 (1993) 64-66, durchgeführt. Bedingungen: Prüfatmosphäre: Luft Prüfkörper: 10 mm Durchmesser, 20 mm Höhe Anpreßdruck: 0,42 N/mm² Gleitgeschwindigkeit: 4 m/s Gegenlaufpartner: - Grauguß 30 - Stahl X20Cd13 Prüfzeit: 100 h Testlauf Prüftemperatur: 100° C Prüfstrecke: 1436 km | | | | |
| ⁴⁾ Werte beziehen sich auf Schälfolien | | | | |
| ⁵⁾ Wert bezieht sich auf 3 Stunden | | | | |

2. Der Abrieb in den folgenden Beispielen 2.1 und 2.2 wurde mittels eines Walzenabriebgerätes (Eigenbau) ermittelt. Der Prüfkörper drückt mit 1 N/mm² auf eine thermostatisierte (50° C), mit 365 U/min. rotierende Walze (Material: Perlitguß Type GGG 60; äußerer Durchmesser: 105,7 mm; Länge: 240 mm; Rauhtiefe: ca. 1,5 µ).
Die Probekörper wurden durch Heißpressen der Polymere und Polymer-Mischungen zu zylindrischen Blöcken mit einem Durchmesser von 45 mm und einer Höhe von 30 mm hergestellt, die schließlich auf einen Durchmesser von 8 mm abgedreht wurden. Die Bedingungen des Heißpressens sind in Tabelle 2 zusammengestellt. Der Abrieb berechnet sich aus dem Quotienten von Abriebvolumen [mm³] und dem Produkt aus Weg [m] und Last [N].

**Tabelle 2**

| Bedingungen des Heißpressens | | |
|---|---|---|
| | Beispiel 2.1 | Beispiel 2.2 |
| Temperatur /°C | | |
| Masse | 340 | 275 |
| Form | 340 | 275 |
| Spez. Preßdruck /bar | 250 | 250 |
| Preßzeit /h | 1 | 2 |

2.1 Der Abrieb von reinem Tetrafluorethylen/Perfluoralkylvinylether-Copolymerisat der Zusammensetzung 95,2 % Tetrafluorethylen-, 3,6 % Perfluoralkylvinylether- und 1,2 % Hexafluorpropylen-Einheiten und einer Mischung von 90 Gew.-Teilen des Fluorpolymers und 10 Gew.-T. Polyphenylensulfon (Pulver D₅₀: 20 µm; hergestellt wie in Beispiel 1 beschrieben) wurde wie oben ermittelt (Tabelle 3).

**Tabelle 3**

| Material | Abrieb [mm³/Nm] |
|---|---|
| Fluorpolymer | 6600 • 10⁻⁷ |
| Fluorpolymer/Polyphenylensulfon, 90:10 (w/w) | 473 • 10⁻⁷ |

2.2 Der Abrieb von reinem Tetrafluorethylen/Ethylen-Copolymerisat der Zusammensetzung 75,5 % Tetrafluorethylen-, 21,0 % Ethylen-, 3,5 % Perfluorbutylethylen-Einheiten und Mischungen des Fluorpolymers und Polyphenylensulfon (Pulver (D₅₀): 20 µm; hergestellt wie in Beispiel 1 beschrieben) wurden wie oben ermittelt (Tabelle 4).

**Tabelle 4**

| Material | Abrieb [mm³/Nm] |
|---|---|
| Fluorpolymer | 958 • 10⁻⁷ |
| Fluorpolymer/Polyphenylensulfon, 95:5 (w/w) | 180 • 10⁻⁷ |
| Fluorpolymer/Polyphenylensulfon, 80:20 (w/w) | 110 • 10⁻⁷ |

Die Beispiele zeigen, daß der Abrieb von Fluorpolymeren durch Zusatz von Polyphenylensulfon deutlich verringert werden.

## Patentansprüche

1. Polymermischung aus
A) mindestens einem Fluorpolymer mit einem Anteil von 50 bis 99 Gew.-% und
B) mindestens einem Polyarylensulfon oder einer Polyarylenverbindung mit mindestens zwei der Brückenglieder -S-, -SO- und -SO₂- oder einer Mischung von beiden, wobei die Komponente B) ein lineares oder verzweigtes Polyarylensystem (Mw: 4000 - 200.000) mit der wiederkehrenden Einheit der Formel (IX) ist, das mindestens eine S und/oder SO und/oder SO₂-Gruppe als Bindeglied enthält
-[(Ar¹)_{d}-X]ₑ-[(Ar²)ᵢ-Y]ⱼ-[(Ar³)ₖ-Z]ₗ-[(Ar⁴)ₒ-W]ₚ- (IX)
wobei Ar¹, Ar², Ar³, Ar⁴, W, X, Y und Z unabhängig voneinander gleich oder verschieden sind, die Indizes d, e, i, j, k, l, o und p sind unabhängig voneinander Null oder ganze Zahlen 1, 2, 3, 4 wobei ihre Summe mindestens 2 ergeben muß, Ar¹, Ar², Ar³ und Ar⁴ stehen in der Formel (IX) für einfache oder direkt para-, meta- oder orthoverknüpfte Arylensysteme mit 6 bis 18 C-Atomen, W, X, Y und Z stellen Verknüpfungsgruppen dar, ausgewählt aus -SO₂-, -S-, -SO-, -CO-, -CO₂-, Alkylen- oder Alkylidengruppen, jeweils mit 1 - 6 C-Atomen und NR¹-Gruppen, wobei R¹ für Alkyl- oder Alkyliden-Gruppen mit 1 - 6 C-Atomen steht, mit der Maßgabe, daß Polymere aus der Klasse der Polyethersulfone ausgenommen sind, mit einem Anteil von 1 bis 50 Gew.-%, wobei die Summe der Komponenten A) und B) stets 100 Gew.-% ist.

2. Polymermischung nach Anspruch 1, dadurch gekennzeichnet, daß der Anteil der Komponente A) 60 bis 98 Gew.-%, insbesondere 70 bis 97 Gew.-% und der Anteil der Komponente B) 2 bis 40 Gew.-%, insbesondere 3 bis 30 Gew.-% beträgt.

3. Polymermischung nach Anspruch 1 oder 2, dadurch gekennzeichnet, daß die Komponente A) eine der wiederkehrenden Einheiten der Formeln (I) bis (VIII) aufweist: 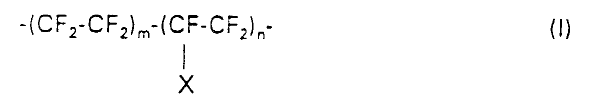
-(CF₂-CF₂)ₘ-(CH₂-CH₂)ₙ- (II)
-(CF₂-CF(CF₃))ₘ-(CF₂-CF₂)ₙ- (III)
-(CF₂-C(Cl)F)ₘ-(CH₂-CH₂)ₙ- (IV)
- CF₂-C(Cl)F- (V)
-CH₂-CF₂- (VI)
-CH₂-CHF- (VII)
-CF₂-CF₂- (VIII)
wobei in der Formel (I) X für O-R steht, mit R als perfluoriertem Alkylrest von C₁ bis C₈, und in den Formeln (I) bis (IV) m und n jeweils für Zahlen von 0,01 bis 1 stehen, wobei die Summe von m und n 1 ergibt.

4. Polymermischung nach einem oder mehreren der Ansprüche 1 bis 3, dadurch gekennzeichnet, daß als Komponente B) Polyarylene mit wiederkehrenden Einheiten der Formel (X) vorhanden sind:
[-(S-E-)ₐ-(-SO-E)_{b}-(SO₂-E)_{c}-] (X)
in der E unabhängig voneinander Phenylen, Naphthylen oder Biphenylen bedeutet, b und c unabhängig voneinander Werte von 0 bis 1 darstellen und a Werte von 0 bis kleiner 1 aufweist, mit der Maßgabe, daß die Summe aus a + b + c gleich 1 ist und mindestens zwei der Indices größer Null sind.

5. Polymermischung nach Anspruch 1, dadurch gekennzeichnet, daß als Komponente B) Polymere mit wiederkehrenden Einheiten der Formeln (XI) - (XIII), 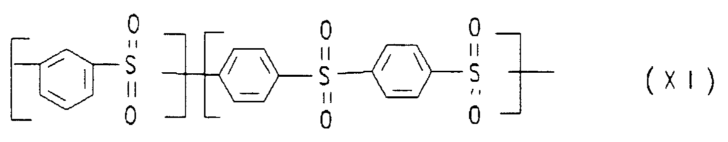 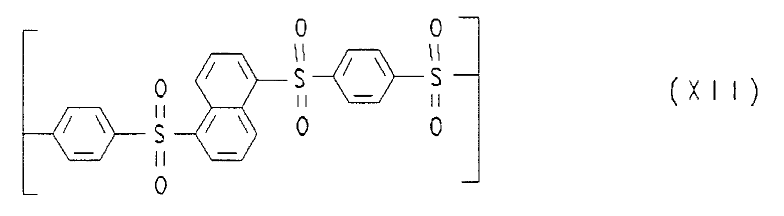 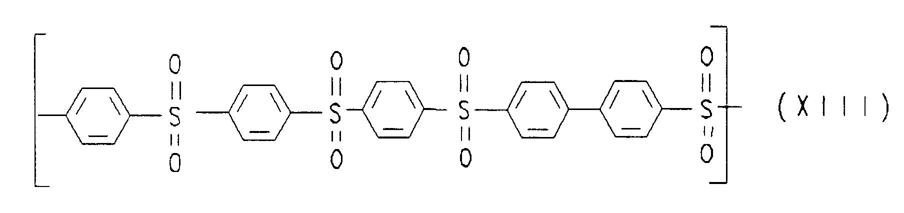 eingesetzt werden.

6. Polymermischung nach Anspruch 4, dadurch gekennzeichnet, daß als Komponente B) oxidierte Polyphenylensulfide mit wiederkehrenden Einheiten der Formel (XIV), 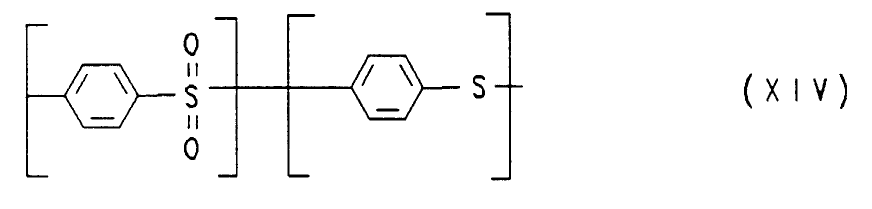 eingesetzt werden, wobei der Sulfonanteil mindestens 65 % beträgt.

7. Polymermischung nach einem oder mehreren der Ansprüche 1 bis 6, dadurch gekennzeichnet, daß die Teilchengröße der oxidierten Polyarylensulfide 3•10⁻⁶ bis 300•10⁻⁶ m beträgt.

8. Polymermischung nach einem oder mehreren der Ansprüche 1 bis 7, dadurch gekennzeichnet, daß sie zusätzlich thermische Stabilisatoren, UV-Stabilisatoren, Antistatika, Flammschutzmittel, Farbstoffe, Pigmente, anorganische und organische Füllstoffe enthält.

9. Verwendung der Polymermischung nach Anspruch 1 zur Herstellung von Formkörpern.

10. Verwendung nach Anspruch 9 als Gleitlager oder Dichtungsmaterialien.

## Claims

1. A polymer mixture made from
A) at least one fluoropolymer in a proportion of from 50 to 99% by weight and
B) at least one polyarylene sulfone or one polyarylene compound having at least two of the bridging members -S-, -SO- and -SO₂- or a mixture of both, where component B) is a linear or branched polyarylene system (Mw: 4000 - 200,000) having the recurring unit of the formula (IX) and containing, as linking member, at least one S and/or SO and/or SO₂ group
-[(Ar¹)_{d}-X]ₑ-[(Ar²)ᵢ-Y]ⱼ-[(Ar³)ₖ-Z]ₗ-[(Ar⁴)ₒ-W]ₚ- (IX)
where Ar¹, Ar², Ar³, Ar⁴, W, X, Y and Z, independently of one another, are identical or different, the indices d, e, i, j, k, l, o and p, independently of one another, are zero or integers 1, 2, 3 or 4, where their total must be at least 2, Ar¹, Ar², Ar³ and Ar⁴ in the formula (IX) are arylene systems which are single or directly para-, meta- or ortho-linked and have from 6 to 18 carbon atoms, W, X, Y and Z are linking groups selected from the class consisting of -SO₂-, -S-, -SO-, -CO-, -CO₂-, alkylene or alkylidene, in each case having from 1 to 6 carbon atoms, and NR¹ groups, where R¹ is alkyl or alkylidene having from 1 to 6 carbon atoms, with the proviso, that polymers of the polyether sulfone class are excluded, in a proportion of from 1 to 50% by weight, where the total of components A) and B) is always 100% by weight.

2. A polymer mixture as claimed in claim 1, wherein the proportion of component A) is from 60 to 98% by weight, in particular from 70 to 97% by weight, and the proportion of component B) is from 2 to 40% by weight, in particular from 3 to 30% by weight.

3. A polymer mixture as claimed in claim 1 or 2, wherein component A) contains one of the recurring units of the formulae (I) to (VIII): 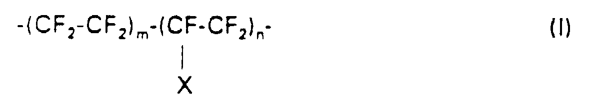
-(CF₂-CF₂)ₘ-(CH₂-CH₂)ₙ- (II)
-(CF₂-CF(CF₃))ₘ-(CF₂-CF₂)ₙ- (III)
-(CF₂-C(Cl)F)ₘ-(CH₂-CH₂)ₙ- (IV)
- CF₂-C(Cl)F- (V)
-CH₂-CF₂- (VI)
-CH₂-CHF- (VII)
-CF₂-CF₂- (VIII)
where X in the formula (I) is O-R, R being a perfluorinated C₁-C₈-alkyl radical, and m and n in the formulae (I) to (IV) are in each case from 0.01 to 1, the total of m and n being 1.

4. A polymer mixture as claimed in one or more of claims 1 to 3, wherein component B) is a polyarylene containing recurring units of the formula (X):
[-(S-E-)ₐ-(-SO-E)_{b}-(SO₂-E)_{c}-] (X)
where E, independently of one another, is phenylene, naphthylene or biphenylene, b and c, independently of one another, are from 0 to 1, and a is from 0 to less than 1, with the proviso that the total of a, b and c is equal to 1 and at least two of the indices are greater than zero.

5. A polymer mixture as claimed in claim 1, wherein component B) is a polymer containing recurring units of the formulae (XI) - (XIII)

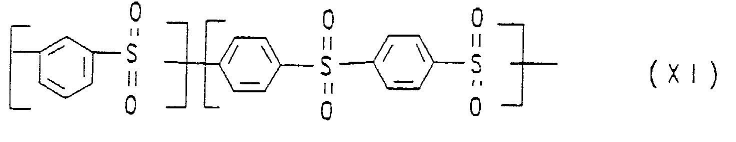

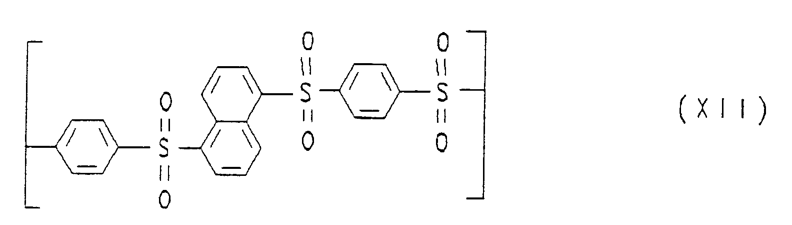

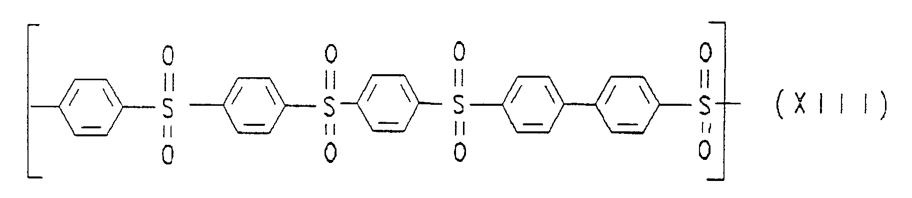

6. A polymer mixture as claimed in claim 4, wherein component B) is an oxidized polyphenylene sulfide containing recurring units of the formula (XIV) 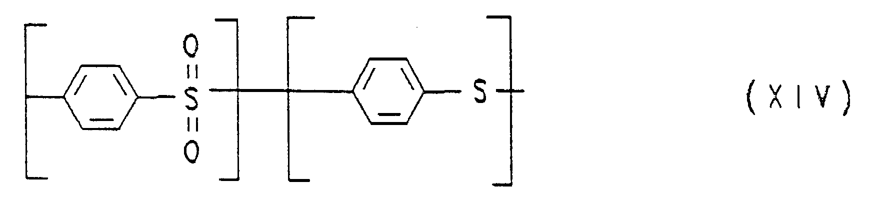 where the sulfone proportion is at least 65%.

7. A polymer mixture as claimed in one or more of claims 1 to 6, wherein the particle size of the oxidized polyarylene sulfides is from 3·10⁻⁶ to 300·10⁻⁶ m.

8. A polymer mixture as claimed in one or more of claims 1 to 7, wherein the mixture additionally contains thermal stabilizers, UV stabilizers, antistats, flame retardants, dyes, pigments and inorganic or organic fillers.

9. The use of a polymer mixture as claimed in claim 1 for producing moldings.

10. The use as claimed in claim 9 as sliding bearings or seal materials.

## Revendications

1. Mélange de polymères, constitué
A) d'au moins un polymère fluoré, selon une proportion de 50 à 99 % en poids, et
B) d'au moins une polyarylènesulfone ou d'un polyarylène comportant au moins deux des chaînons pontants -S-, -SO- et -SO₂-, ou d'un mélange des deux, auquel cas le constituant B) est un système polyarylène linéaire ou ramifié (masse molaire 4000-200 000) ayant le motif répétitif de formule (IX), qui contient au moins un groupe S et/ou SO et/ou SO₂ en tant que chaînon de liaison
-[(Ar¹)_{d}-X]ₑ-[(Ar²)ᵢ-Y]ⱼ-[(Ar³)ₖ-Z]ₗ-[(Ar⁴)ₒ-W]ₚ- (IX)
où Ar¹, Ar², Ar³, Ar⁴, W, X, Y et Z sont, chacun indépendamment des autres, identiques ou différents, les indices d, e, i, j, k, l, o et p sont indépendants les uns des autres et valent chacun zéro ou représentent les nombres entiers 1, 2, 3 ou 4, auquel cas leur somme doit être au moins égale à 2, Ar¹, Ar², Ar³ et Ar⁴ représentent dans la formule (IX) des systèmes arylène à liaison simple ou directement liés en position para, méta ou ortho, ayant de 6 à 18 atomes de carbone, W, X, Y et Z représentent des groupes de liaison choisis parmi -SO₂-, -S-, -SO-, -CO-, -CO₂-, des groupes alkylène ou alkylidène ayant chacun de 1 à 6 atomes de carbone, et des groupes NR¹, où R¹ représente des groupes alkyle ou alkylidène ayant de 1 à 6 atomes de carbone, à la condition que soient exclus les polymères de la classe des polyéthersulfones, selon une proportion de 1 à 50 % en poids, la somme des constituants A) et B) étant toujours de 100 % en poids.

2. Mélange de polymères selon la revendication 1, caractérisé en ce que la proportion du constituant A) est de 60 à 98 % en poids, en particulier de 70 à 97 % en poids, et la proportion du constituant B) est de 2 à 40 % en poids, en particulier de 3 à 30 % en poids.

3. Mélange de polymères selon la revendication 1 ou 2, caractérisé en ce que le constituant A) comprend l'un des motifs répétitifs ayant les formules (I) à (VIII) : 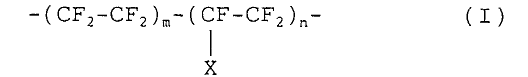
-(CF₂-CF₂)ₘ-(CH₂-CH₂)ₙ- (II)
-(CF₂-CF(CF₃))ₘ-(CF₂-CF₂)ₙ- (III)
-(CF₂-C(Cl)F)ₘ-(CH₂-CH₂)ₙ- (IV)
-CF₂-C(Cl)F- (V)
-CH₂-CF₂- (VI)
-CH₂-CHF- (VII)
-CF₂-CF₂- (VIII)
dans lesquelles, dans la formule (I), X représente O-R, R étant un radical alkyle perfluoré en C₁ à C₈, et, dans les formules (I) à (IV), m et n représentent chacun un nombre de 0,01 à 1, la somme de m et de n étant égale à 1.

4. Mélange de polymères selon l'une ou plusieurs des revendications 1 à 3, caractérisé en ce qu'on utilise en tant que constituant B) des polyarylènes ayant des motifs répétitifs de formule (X)
[-(S-E-)ₐ-(-SO-E)_{b}-(SO₂-E)_{c}-] (X)
dans laquelle les radicaux E, indépendamment les uns des autres, représentent chacun le groupe phénylène, naphtylène ou biphénylène, b et c, chacun indépendamment l'un de l'autre, vont de 0 à 1, et a va de 0 à moins de 1, à la condition que la somme a + b + c soit égale à 1 et qu'au moins deux des indices soient supérieurs à zéro.

5. Mélange de polymères selon la revendication 1, caractérisé en ce qu'on utilise en tant que constituant B) des polymères comportant des motifs répétitifs ayant les formules (XI) à (XIII)

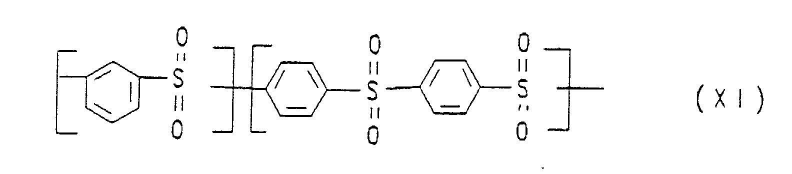

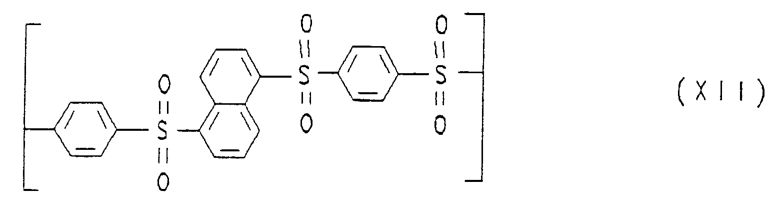

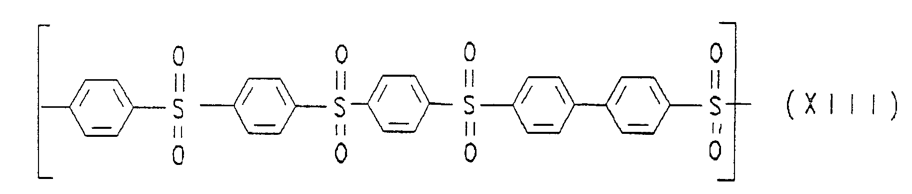

6. Mélange de polymères selon la revendication 4, caractérisé en ce qu'on utilise en tant que constituant B) des polysulfures de phénylène oxydés comportant des motifs répétitifs de formule (XIV) 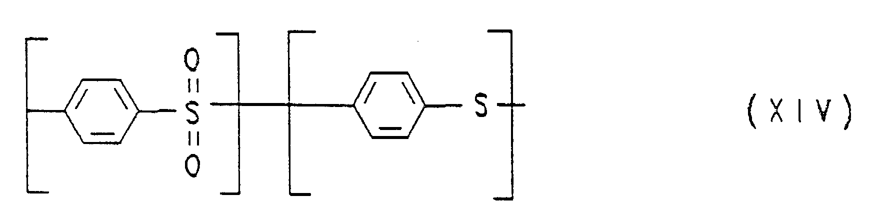 la proportion de la sulfone étant d'au moins 65 %.

7. Mélange de polymères selon l'une ou plusieurs des revendications 1 à 6, caractérisé en ce que la granulométrie des polysulfures d'arylène oxydés est de 3.10⁻⁶ à 300.10⁻⁶ m.

8. Mélange de polymères selon l'une ou plusieurs des revendications 1 à 7, caractérisé en ce qu'il contient en outre des stabilisants thermiques, des stabilisants UV, des antistatiques, des agents d'ignifugation, des colorants, des pigments, des charges minérales et des charges organiques.

9. Utilisation du mélange de polymères selon la revendication 1 pour fabriquer des objets moulés.

10. Utilisation selon la revendication 9 en tant que palier lisse ou matériaux d'étanchéité.
